# EUROPEAN PATENT APPLICATION

(11) **EP 3 644 258 A1**
(43) Date of publication of application: **29.04.2020**
(21) Application number: 19204728.0
(22) Date of filing: 22.10.2019
(51) Int. Cl.: G06Q 20/38

(54) **SYSTEMS AND METHODS TO UPDATE SHARED DATABASES USING BLOCKCHAIN TECHNOLOGY**

(30) Priority: 26.10.2018 US 201816171698
(71) Applicant: Honeywell International Inc., Morris Plains, NJ 07950 (US)
(72) Inventor: P R, Sriram, Morris Plains, NJ New Jersey 07950 (US); BALCHUNAS, Jr., Norman J, Morris Plains, NJ New Jersey 07950 (US); BALASA, Swetha, Morris Plains, NJ New Jersey 07950 (US); REDDY, Pushpa Basavapura Veerabhadra, Morris Plains, NJ New Jersey 07950 (US)
(74) Representative: Haseltine Lake Kempner LLP

(57) **Abstract**

Systems and methods are disclosed for updating shared databases using blockchain technology. Methods comprise receiving aircraft data from a first user among a plurality of users; validating the received aircraft data; storing the validated aircraft data to the shared database; receiving a request for data from a second user among the plurality of users; and providing the validated aircraft data to the second user from the shared database.

## Description

### TECHNICAL FIELD

Various embodiments of the present disclosure generally relate to updating shared databases and, more particularly, to systems and methods to update shared databases using blockchain technology.

### BACKGROUND

Various databases, such as navigation databases, weather databases, terrain databases, etc., are provided to pilots to assist them in viewing surrounding terrain and obstructions while piloting an aircraft. The databases help in better planning and situational awareness while flying, like when used for a Synthetic Vision System (SVS). The SVS is a computer-mediated reality system which uses such a shared terrain database. The SVS provides flight crews with clear, intuitive, and unprecedented situational awareness of their flying environment by providing a three-dimensional (3D) representation of the external environment surrounding the outside of the aircraft. However, the terrain databases that the SVS relies upon are static and not updated frequently. As such, an Enhanced Vision System (EVS) was introduced to solve the problem of providing an image of a dynamically changing environment. The EVS incorporates information from onboard sensors, such as a belly mounted camera, and overlays the real-time image with the terrain database image. Though the EVS solves the problem of using a static database, the real-time images are available to the pilot very close to the anticipated impact region.

Further, the flight planning engine organizations that provide route planning and allied services (e.g., live flight tracking services) do not have access to the updated and dynamic databases and thus, provide services with out-of-date databases. As such, there exists a need to provide the dynamic databases to the planning and tracking agencies to perform their duties in an effective manner. Similarly, this problem is applicable to other databases, such as navigation databases. Such databases may have procedures that have been removed from the database or in which the database is otherwise unavailable due to a temporary flight restriction, such as by a Notice to Airmen (NOTAM), which may last for an entire cycle (e.g., 28 days). Therefore, there is a need to update the shared databases appropriately to provide real-time situational awareness of an airport environment through live feeds.

The present disclosure is directed to overcoming one or more of these above-referenced challenges.

### SUMMARY OF THE DISCLOSURE

According to certain aspects of the disclosure, systems and methods are disclosed to update shared databases using blockchain technology.

In one embodiment, a computer-implemented method is disclosed for updating a shared database. The computer-implemented method may comprise: receiving aircraft data from a first user among a plurality of users; validating the received aircraft data; storing the validated aircraft data to the shared database; receiving a request for data from a second user among the plurality of users; and providing the validated aircraft data to the second user from the shared database.

In accordance with another embodiment, a computer-implemented method is disclosed for updating a shared database using blockchain technology. The computer-implemented method may comprise: receiving aircraft data from a first user among a plurality of users; determining if there is a difference between the received aircraft data and aircraft data stored in a shared ledger; if there is a difference between the received aircraft data and the stored aircraft data, validating the received aircraft data; granting permission to the first user to write onto the shared ledger; and writing the validated aircraft data as a blockchain entry that stores the validated aircraft data to the shared ledger.

In accordance with another embodiment, a computer-implemented method is disclosed for updating shared terrain databases using blockchain technology. The computer-implemented method may comprise: receiving an image of terrain from a first user among a plurality of users; validating the received image; generating a blockchain entry that stores the validated image to the shared terrain database; receiving a request for a terrain image from a second user among the plurality of users; and providing the validated image to the second user from the shared terrain database.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts a block diagram of a system for updating a shared database, according to one or more embodiments.
FIG. 2 depicts a block diagram of a system for updating shared databases of a ground station and of one or more airlines, according to one or more embodiments.
FIG. 3 depicts a flow diagram of a method for updating a shared database, according to one or more embodiments.
FIG. 4 depicts a flow diagram of an exemplary method for updating a shared database using blockchain technology, according to one or more embodiments.
FIG. 5 depicts a high-level functional block diagram of an exemplary computer device or system, in which embodiments of the present disclosure, or portions thereof, may be implemented.

### DETAILED DESCRIPTION

The following embodiments describe systems and methods for updating a shared database. As described above, there is a need to provide dynamic databases to planning and tracking agencies and to update the dynamic databases while avoiding human error. In general, the present disclosure is directed to updating a shared database using blockchain technology. As described in more detail below, technological advancements in image processing help in capturing images of terrain and landing airports accurately (via aircrafts, ground personnel, or through unmanned aerial vehicles (UAVs). Once such an image is obtained, the image may be passed on to a network by a user. The image may be validated through authentication means (like centralized databases or through airport advisory circular information) and the information may be written to the centralized blockchain shared database. The user or provider of the information may be provided with loyalty points for providing the update and the loyalty points may be used by the user for any related transaction. Once the image is updated in the server, a message may be provided to any connected user searching or flying into the vicinity of the updated location. It may be important for the user to be aware of this update as the user is flying to the location. Additionally, the update may provide awareness to the user of seasonal or situational changes beforehand. When the user requests an update, the system may validate the user. For first time users, the user may subscribe to the information for a limited time period and when the time period expires, the subscription may be renewed. The shared update may be updated only when the update is accepted by an end user.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

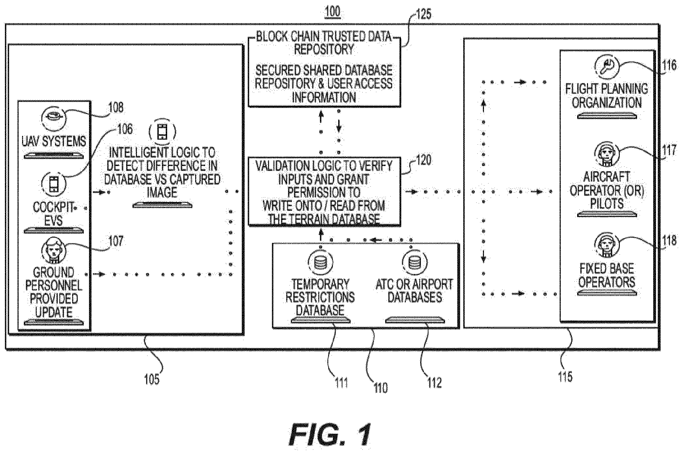

Referring now to the appended drawings, FIG. 1 shows an exemplary embodiment of a system 100 for updating a shared database 125. In general, FIG. 1 depicts one or more inputs 105, one or more validation databases 110, and one or more outputs 115. The one or more inputs 105 may comprise inputs from one or more aircrafts 106, one or more ground personnel 107, or one or more unmanned aerial vehicles (UAVs) 108. The one or more aircrafts 106 may each include an Enhanced Vision System (EVS), or the like, that captures images of terrain using a belly-mounted camera. The one or more validation databases 110 may comprise one or more of a temporary restrictions database 111 and/or an air traffic control/airport database 112. The one or more outputs 115 may comprise one or more flight planning organizations 116 (e.g., Honeywell International Inc.'s GoDirect Flight Planning), one or more aircraft operators or pilots 117, or one or more fixed base operators 118, such as flight tracking services (e.g., Honeywell International Inc.'s Sky Connect). System 100 may further comprise a processor 120 for validating data from the one or more inputs 105, as described below. Additionally, system 100 may also include a shared database 125, such as a blockchain trusted data repository.

In one embodiment, system 100 may be used to update the shared database 125. Processor 120 may receive data from at least one of the one or more inputs 105 (e.g., the one or more aircraft 106, the one or more ground personnel 107, or the one or more UAVs 108). When the data is received, the processor 120 may validate the received data through authentication means, such as centralized databases or through airport advisory circular information, as described below. The processor 120 may use intelligent logic to detect differences in the data stored in the shared database 125 and the data received from the at least one of the one or more inputs 105. If the data received from the at least one of the one or more inputs 105 is different than the data stored in the shared database 125, the processor 120 may then validate the at least one of the one or more inputs 105 that provided the data.

As described above, the images provided by current EVS systems are only available to the pilot very close to the anticipated impact region. As such, in another embodiment, system 100 may also be implemented for updating a shared database 125 that stores terrain images in a shared terrain and navigation database. Processor 120 may receive an image of terrain and/or a landing airport from at least one of the one or more inputs 105 (e.g., the one or more aircraft 106, the one or more ground personnel 107, or the one or more UAVs 108). Once the image is received, the processor 120 may validate the image through authentication means, such as centralized databases or through airport advisory circular information. The processor 120 may use intelligent logic to detect differences in the image stored in the shared database 125 and the image received from the at least one of the one or more inputs 105. If the image received from the at least one of the one or more inputs 105 is different than the data stored in the shared database 125, the processor 120 may then validate the at least one of the one or more inputs 105 that provided the image.

In one embodiment, the processor 120 may validate using one or more validation sources. The processor 120 may use validation logic to validate the one or more inputs 105 has permission and/or access to write onto or read from the shared database 125. For example, an air traffic control/airport database 112 may store aircraft information for the processor 120 to verify whether the at least one of the one or more inputs 105 (e.g., at least one aircraft of the one or more aircrafts 106) has permission to write onto or read from the shared database 125. A temporary flight restriction database 111 may also be used to validate the one or more inputs 105. The temporary flight restriction database 111 may store information related to whether or not a respective aircraft of the one or more aircrafts 106 is temporarily restricted from operating within a defined area, such that the respective aircraft does not have access to write to or read from the shared database 125.

After the one or more inputs 105 has been validated, the processor 120 may grant permission for the one or more inputs 105 to write onto and read from the shared database 125. The processor 120 may then update the shared database 125 by writing the received data onto the shared database 125. The data stored in the shared database 125 may be available for the one or more outputs 115 that have permission/access to read from the shared database 125. The processor 120 may similarly validate the one or more outputs 115 and grant permission to read from the shared database 125. Once the data is updated in the shared database 125, the processor 120 may transmit a message to any of the one or more inputs 105 or any of the one or more outputs 115 that the shared database 125 has been updated. For example, when the shared database 125 is a terrain database, a message may be transmitted to any connected user of the one or more outputs 115 searching or flying into the vicinity of the updated location.

In one embodiment, an incentive system may be used to provide incentives to users to provide data or images for updating the shared database. For example, the user or provider of the data or image may be provided with loyalty points for providing the data or image used to update the shared database 125. The loyalty points may be used by the user for any related transaction, such as receiving other updated data or images from the shared database 125. Thus, the incentive system may incentivize users to provide data or images that may include costs for transmitting.

In another embodiment, the shared database 125 may be a blockchain shared database. The blockchain shared database may be a secured shared database repository and may store user access information. In this embodiment, the processor 120 may validate the one or more inputs 105 the same way as described above. However, after validation, the processor 120 may generate a blockchain entry to store the received data in a shared ledger in the shared database 125. The shared ledger may be accessed by a plurality of users, such as the one or more outputs 115.

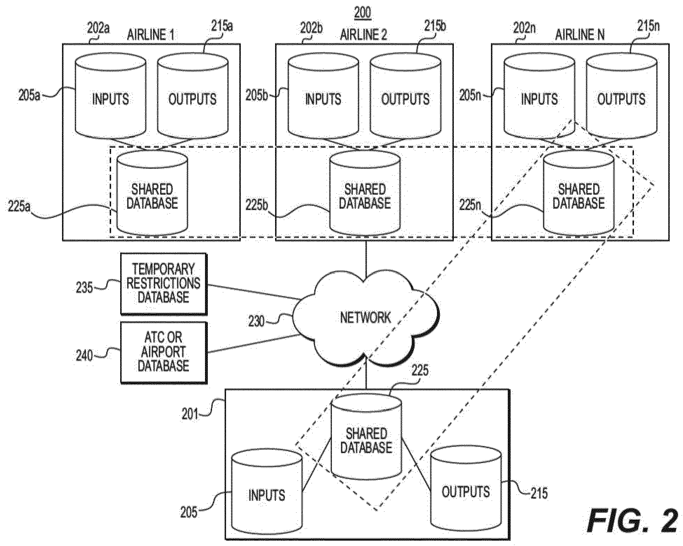

FIG. 2 depicts a block diagram of a system 200 for updating shared databases 225, 225a-225n from a ground station 201 and one or more airlines 202a-202n. In general, FIG. 2 depicts a ground station 201, one or more airlines 202a-202n, a temporary restrictions database 235, and an ATC/airport database 240 all connected by an electronic network 230. As described above with respect to FIG. 1, each of the ground station 201 and each of the one or more airlines 202a-202n may include a system, such as system 100, for updating a shared database, such as a blockchain-based shared database or ledger. For example, the ground station 201 may include one or more inputs 205, one or more outputs 215, and a ground station shared database 225. Likewise, each of the one or more airlines 201a-201n may include one or more inputs 205a-205n, one or more outputs 215a-215n, and an airline shared database 225a-225n.

The ground station shared database 225 and each airline shared database 225a-225n of system 200 may be updated in a similar manner to the shared database 125 of system 100. For example, a processor 120 of the ground station 201 may receive data from at least one of the one or more inputs 205 or a processor 120 of one of the one or more airlines 202a-202n may receive data from at least one of the one or more inputs 205a-205n. When the data is received, the processor 120 of the ground station 201 or the processor 120 of the one of the one or more airlines 202a-202n may validate the received data through authentication means, such as centralized databases or through airport advisory circular information. The processor 120 may use intelligent logic to detect differences in the data stored in the shared database 225, 225a-22n and the data received from the at least one of the one or more inputs 205, 205a-205n. If the data received from the at least one of the one or more inputs 205, 205a-205n is different than the data stored in the shared database 225, 225a-225n, the processor 120 may then validate the at least one of the one or more inputs 205, 205a-205n that provided the data.

In one embodiment of system 200, the ground station 201 and the one or more airlines 202a-202n may define a network 230 such that the ground station shared database 225 and each airline shared database 225a-225n may be updated using blockchain technology. For example, the ground station 201 and the one or more airlines 202a-202n may represent nodes and the ground station shared database 225 and each airline shared database 225a-225n may be blockchain trusted data repositories. As such, when data is received from one of the one or more inputs 205, 205a-205n, the received data may be validated similar to the validation process in system 100, as described above. For example, a temporary flight restriction database 235 may be used to validate the one or more inputs 205, 205a-205n. The temporary flight restriction database 235 may store information related to whether or not a respective aircraft of the respective one or more airlines 202a-202n is temporarily restricted from operating within a defined area, such that the respective aircraft does not have access to write to or read from the shared database 225, 225a-225n. An air traffic control/airport database 240 may store aircraft information for the network 230 to validate by verifying whether the at least one of the one or more inputs 205, 205a-205n (e.g., at least one aircraft of the one or more airlines 202a-202n) has permission to write onto or read from the shared database 225, 225a-225n.

Additionally, the data written to the blockchain trusted data repository may be validated by the ground station 201 and the one or more airlines 202a-202n. For example, the ground station 201 or one of the one or more airlines 202a-202n that provide the received data may be validated if at least fifty-one percent (51%) or more of the nodes (e.g., the ground station 201 and/or the one or more airlines 202a-202n) approve or validate the ground station 201 or the one of the one or more airlines 202a-202n that provided the received data. Further, the received data may be validated if at least fifty-one percent (51%) or more of the nodes approve or validate the received data. If the received data is validated, it may be written to the blockchain trusted data repository creating a blockchain entry in a shared ledger (e.g., in the ground station shared database 225 and the airline shared databases 225a-225n). Thus, the ground station shared database 225 and the airline shared databases 225a-225n may be updated with the received data.

After the ground station shared database 225 and the airline shared databases 225a-225n have been updated with the received data, a message may be sent to the one or more outputs 215, 215a-215n. The one or more outputs 215, 215a-215n may then transact to access the respective updated shared database 225, 225a-225n. The processor 120 may use validation logic to validate the one or more outputs 215, 215a-215n, and grant permission to read from the respective updated shared database 225, 225a-225n. The ground station 201 and the one or more airlines 202a-202n may receive loyalty points for providing the updated data. The loyalty points may be used for any related transaction, such as by the one or more outputs 215, 215a-215n in transactions for accessing the updated shared database 225, 225a-225n.

In one embodiment, each of the shared databases 225, 225a-225n may be a shared terrain database. In this embodiment, one of the one or more inputs 205, of the ground station 201 or one of the one or more inputs 205a-205n of the one or more airlines 202a-202n may provide an image of terrain and/or a landing airport. When the image is obtained, the image may be passed on to the network 230 by the ground station 201 or the respective one of the one or more airlines 202a-202n. The image may be validated through authentication means (e.g., centralized databases or through airport advisory circular information). For example, if fifty-one percent (51%) or more of the nodes (the ground station 201 and/or the one or more airlines 202a-202n) validate and approve the image, the image may be validated.

Further, validation logic may be used to validate the ground station 201 or the respective one of the one or more airlines 202a-202n providing the image has permission to write onto the shared terrain databases 225, 225a-225n through a temporary flight restriction database 235 and/or an air traffic control/airport database 240. If validated, the image may then be written to the shared terrain databases 225, 225a-225n and a blockchain entry may be generated as a shared ledger. Thus, the shared terrain databases 225, 225a-225n may be updated. It may be important for the one or more outputs 215, 215a-215n to be aware of the updated shared terrain database 225, 225a-225n as the one or more outputs 215, 215a-215n approaches the location from which the updated image is obtained. As such, a message may be provided to the one or more outputs 215, 215a-215n that the shared terrain database 225, 225a-225n has been updated when the one or more outputs 215, 215a-215n is in the vicinity of the updated image location. When the one or more outputs 215, 215a-215n requests an update, the system 200 may validate the one or more outputs 215, 215a-215n, similar to above. The respective shared terrain database 225, 225a-225n may be updated only when the update is accepted by the respective ground station 201 or respective one of the one or more airlines 202a-202n.

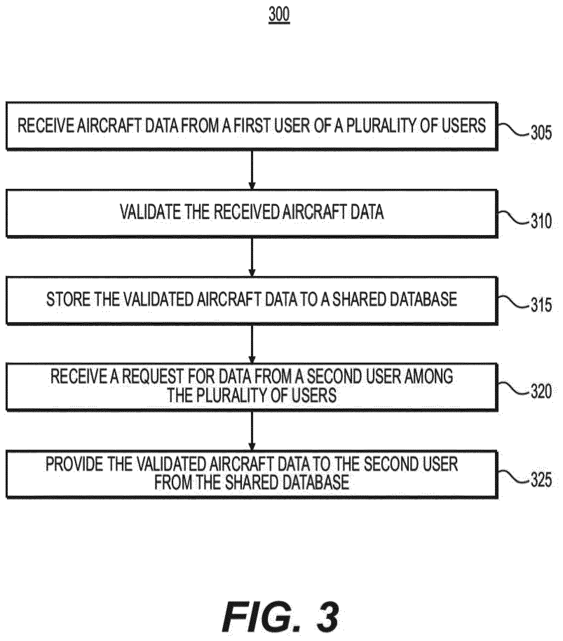

FIG. 3 depicts a flow diagram of an exemplary method 300 for updating a shared database 125. In the method 300, aircraft data from a first user of a plurality of users (e.g., the one or more inputs 105) is received by a processor 120 (Step 305). The processor 120 validates the received aircraft data (Step 310) and stores the validated aircraft data to the shared database 125 (Step 315). The processor 120 then receives a request for data from a second user among the plurality of users (e.g., the one or more outputs 115) (Step 320) and provides the validated aircraft data to the second user from the shared database 125 (Step 325).

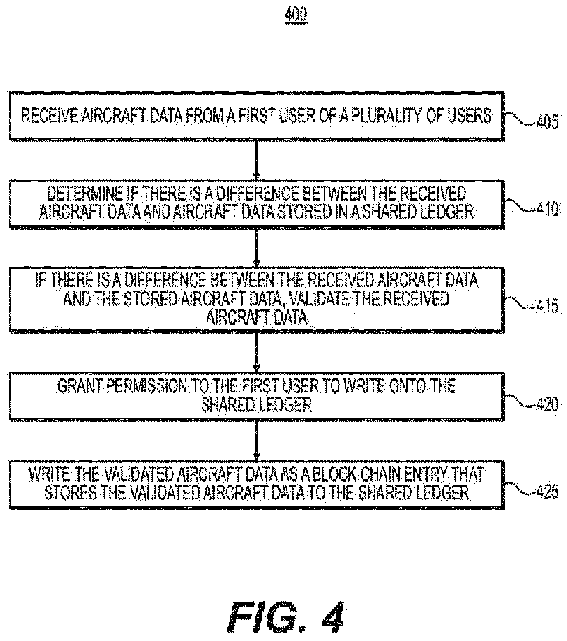

FIG. 4 depicts a flow diagram of an exemplary method 400 for updating a shared database using blockchain technology. In method 400, a processor 120 may receive aircraft data from a first user among a plurality of users (Step 405). The processor 120 may determine if there is a difference between the received aircraft data and aircraft data stored in a shared ledger (Step 410). If there is a difference between the received aircraft data and the stored aircraft data, the processor 120 may validate the received aircraft data (Step 415). The processor 120 may then grant permission to the first user to write onto the shared ledger (Step 420). Finally, the processor 120 may write the validated aircraft data as a blockchain entry that stores the validated aircraft data to the shared ledger (Step 425).

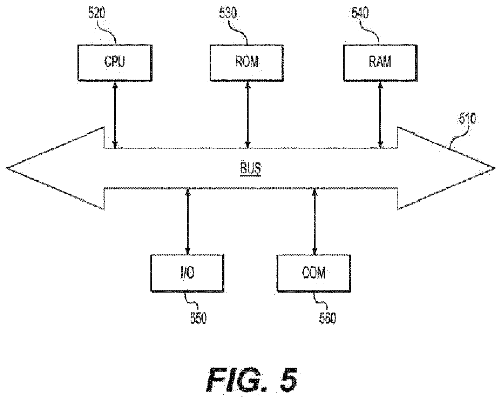

FIG. 5 depicts a high-level functional block diagram of an exemplary computer device or system, in which embodiments of the present disclosure, or portions thereof, may be implemented, e.g., as computer-readable code. For example, each of the exemplary systems, user interfaces and methods described above with respect to FIGS. 1-4 can be implemented in device 500 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-4.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments of the present disclosure, as described above in the examples of FIGS. 1-4 may be implemented using device 500. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

As shown in FIG. 5, device 500 may include a central processing unit (CPU) 520. CPU 520 may be any type of processor device including, for example, any type of special purpose or a general-purpose microprocessor device. As will be appreciated by persons skilled in the relevant art, CPU 520 also may be a single processor in a multi-core/multiprocessor system, such system operating alone, or in a cluster of computing devices operating in a cluster or server farm. CPU 520 may be connected to a data communication infrastructure 510, for example, a bus, message queue, network, or multi-core message-passing scheme.

Device 500 may also include a main memory 540, for example, random access memory (RAM), and may also include a secondary memory 530. Secondary memory 530, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 530 may include other similar means for allowing computer programs or other instructions to be loaded into device 500. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 500.

Device 500 may also include a communications interface ("COM") 560. Communications interface 560 allows software and data to be transferred between device 500 and external devices. Communications interface 560 may include a modem, a network interface (such as an Ethernet card), a communications port, a PCMCIA slot and card, or the like. Software and data transferred via communications interface 560 may be in the form of signals, which may be electronic, electromagnetic, optical, or other signals capable of being received by communications interface 560. These signals may be provided to communications interface 560 via a communications path of device 500, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 500 also may include input and output ports 550 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for updating a shared database, the method comprising:
receiving aircraft data from a first user among a plurality of users;
validating the received aircraft data;
storing the validated aircraft data to the shared database;
receiving a request for data from a second user among the plurality of users; and
providing the validated aircraft data to the second user from the shared database.

2. The method of claim 1, wherein validating the received aircraft data includes validating the received aircraft data and granting permission to the first user to write onto or read from the shared database.

3. The method of claim 1, wherein validating the received aircraft data includes validating the first user to grant permission to write onto the shared database.

4. The method of claim 1, wherein storing the validated aircraft data to the shared database comprises generating a blockchain entry that stores the validated aircraft data to a shared ledger.

5. The method of claim 4, wherein the shared database includes at least one of a secured shared database repository or user access information.

6. The method of claim 1, further comprising validating the second user to grant permission to the second user to read from the shared database.

7. The method of claim 1, wherein the first user of the plurality of users comprises at least one of an aircraft, ground personnel, or an unmanned aerial vehicle system.

8. The method of claim 1, wherein the second user of the plurality of users comprises at least one of a flight planning organization, an aircraft operator, an aircraft pilot, or flight tracking services.

9. A computer-implemented method for updating a shared database using blockchain technology, the method comprising:
receiving aircraft data from a first user among a plurality of users;
determining if there is a difference between the received aircraft data and aircraft data stored in a shared ledger;
if there is a difference between the received aircraft data and the stored aircraft data, validating the received aircraft data;
granting permission to the first user to write onto the shared ledger; and
writing the validated aircraft data as a blockchain entry that stores the validated aircraft data to the shared ledger.

10. The method of claim 9, wherein the received data is a captured image of terrain, and the shared ledger is a terrain database.

## Amended claims

### Amended claims in accordance with Rule 137(2) EPC.

1. A computer-implemented method for updating a shared database using blockchain technology, the method comprising:
receiving aircraft data from a first user among a plurality of users;
determining if there is a difference between the received aircraft data and aircraft data stored in a shared ledger;
if there is a difference between the received aircraft data and the stored aircraft data, validating the received aircraft data;
granting permission to the first user to write onto the shared ledger; and
writing the validated aircraft data as a blockchain entry that stores the validated aircraft data to the shared ledger.

2. The method of claim 1, wherein the received data is a captured image of terrain, and the shared ledger is a terrain database.

3. The method of claim 1, further comprising:
receiving a request for data from a second user among the plurality of users; and
providing the validated aircraft data to the second user from the shared database.

4. The method of claim 1, further comprising granting permission to the first user to read from the shared database.

5. The method of claim 1, wherein validating the received aircraft data includes validating the first user to grant permission to write onto the shared database.

6. The method of claim 1, wherein the shared database includes at least one of a secured shared database repository or user access information.

7. The method of claim 3, further comprising validating the second user to grant permission to the second user to read from the shared database.

8. The method of claim 1, wherein the first user of the plurality of users comprises at least one of an aircraft, ground personnel, or an unmanned aerial vehicle system.

9. The method of claim 3, wherein the second user of the plurality of users comprises at least one of a flight planning organization, an aircraft operator, an aircraft pilot, or flight tracking services.
